# EUROPEAN PATENT SPECIFICATION

(11) **EP 1 167 084 B1**
(45) Date of publication and mention of the grant of the patent: **02.08.2006**
(21) Application number: 01305380.6
(22) Date of filing: 21.06.2001
(51) Int. Cl.: B60C 11/12, B60C 11/11, B60C 11/13

(54) **Pneumatic tires**
Luftreifen
Bandages pneumatiques

(30) Priority: 22.06.2000 JP 2000187148; 08.09.2000 JP 2000273229
(43) Date of publication of application: 02.01.2002
(60) Divisional application: 05014987.1
(73) Proprietor: Bridgestone Corporation, Tokyo (JP)
(72) Inventor: Ito, Takahiro, Kodaira City, Tokyo (JP); Matsuzaki, Jun, Kodaira City, Tokyo (JP)
(74) Representative: Whalley, Kevin

(56) References cited:
- EP-A- 0 485 883
- EP-A- 0 689 946
- EP-A- 0 722 852
- EP-A- 0 810 104
- EP-A- 0 861 741
- EP-A- 1 010 551
- US-A- 5 896 905

## Description

This invention relates to a pneumatic tire having a tread life improved by suppressing irregular wear of a tread.

As a radial tire for a passenger car, there have been known pneumatic tires having a block-type tread pattern in which a plurality of block rows are formed in a surface of a tread contacting with the ground. In general, such a block is defined in substantially a quadrilateral shape by two pairs of main grooves having different angles with respect to an equatorial plane of the tire. In such a pneumatic tire, a sub-groove(s) such as a sipe or the like is formed in each of the blocks in order to improve the wet performances.

When the sub-groove such as the sipe or the like is formed in the block, the edge factors are increased to improve wet performances, but the rigidity of the block is decreased and hence dry performance may be degraded.

The sipe is usually formed in the block so as to extend from an outer surface of the block in a direction substantially perpendicular to the block surface. In this case, there is a tendency of causing irregular wear because the wearing is progressed due to the falling-down of a portion of the block in the vicinity of the sipe. Moreover, the term "falling-down of a portion of block" used herein means a deformation of the block when a force is applied to a surface of the block.

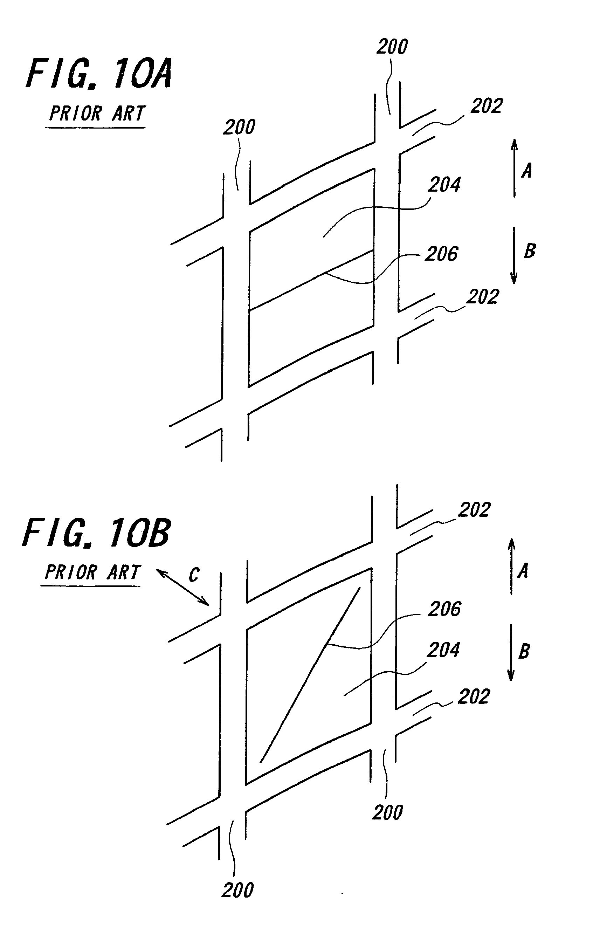

Also, as shown in FIG. 10A of the accompanying drawings, when a block 204 having substantially a parallelogram shape defined by a pair of main grooves 200 extending in a circumferential direction (shown by arrows A and B) and another pair of main grooves 202 crossing with the main grooves 200 is divided into two equal parts by a sub-groove 206 formed in the block 204 in parallel to the main groove 202, there is caused a problem of lowering the rigidity of the block 204 in the circumferential direction of the tire.

Furthermore, as shown in FIG. 10B, when the sub-groove 206 is formed in the block 204 having substantially a parallelogram shape along a long diagonal thereof, the block 204 is divided into two small block parts each having substantially an elongated triangular form and hence there is caused a problem of considerably lowering the rigidity of the block 204 in a direction perpendicular to the longitudinal direction of the sub-groove 206 (shown by an arrow C).

In the case of super-high performance passenger cars, the rotating direction of the tire is specified and the tire size frequently differs between front and rear wheels, so that it is frequently impossible to conduct the tire rotation in use. T herefore, the tire is at a state of being continuously and easily subjected to the force of a given direction.

To this end, in the block portion near to the sipes evenly arranged with respect to the conventional input direction there is recognized a tendency of growing irregular wear in only a specified direction in accordance with the tire mounting position. Also, the width of the sipe is narrowed under certain input conditions, so that there is a tendency of lowering the drainage property in the block.

These tendencies are considered to result from the falling-down of the block in the vicinity of the sipe. Therefore, if the falling-down of the block can be controlled, it should be possible to suppress the irregular wear and improve the steering stability on a wet road surface. Attention is also drawn to the disclosure of US-A-5 896 905.

Under the above circumstances, it is an object of the present invention to provide a pneumatic tire capable of improving the wet performances while maintaining the rigidity of the block and suppressing the occurrence of irregular wear.

It is another object of the invention to provide a pneumatic tire capable of improving the wear resistance in correspondence to the difference of the input direction between external forces generated due to the difference of the tire mounting positions.

According to the present invention, there is provided a pneumatic tire comprising a tread portion having a plurality of blocks, each of which blocks having at least one sub-groove including a central main portion and end portions connecting the central main portion to a circumferential groove, wherein the central main portion is inclined with respect to an equatorial plane of the tire in a direction opposite to a direction of inclination of each of the end portions, and wherein that the central main portion of the sub-groove is formed so that a groove bottom is inclined from a groove opening at an outer surface side of the block in a direction of a main stress applied from a road surface to the block and the end portions of the sub-groove are formed so that the groove bottom extends substantially vertically to the outer surface of the block.

The action of such a pneumatic tire will be explained below.

In the pneumatic tire having a block-type tread pattern, the central main portion of the sub-groove formed in the block is formed so that the groove bottom is inclined from the surface side of the block in a direction of a largest main stress among external forces applied from the road surface to the block.

Since the input directions of the external forces usually differ for each tire mounting position, if the pneumatic tire as defined in the invention is mounted onto a super-high performance passenger car making no tire rotation, the wear of the tire grows in only a specified direction decided for each tire mounting position to cause irregular wear due to the falling-down of a portion of the block around the sub-groove. In the invention, the central main portion of the sub-groove is formed so as to be inclined toward the groove bottom thereof, whereby the rigidity of the portion of the block in the vicinity of the sub-groove is changed to suppress the irregular wear.

That is, the central main portion of the sub-groove is inclined in the direction of the largest main stress among the external forces applied from the road surface to the block, whereby the rigidity of the block portion in the vicinity of the sub-groove fallen down toward the sub-groove through an external force can be enhanced to suppress the falling-down of the block and hence the occurrence of the irregular wear.

Although the arranging position and the size of the sub-groove are the same as in a conventional one, the wear resistance can be improved in correspondence to the difference between the input directions of the external forces generated by the difference between the tire mounting positions at a state of maintaining dry gripping and wet gripping properties equal to those of the conventional tire and hence a long tread life of the tire can be attained.

In a preferable embodiment of the invention, the block is shaped in substantially a quadrilateral form and the central main portion of the sub-groove is extended along a short diagonal of the block. In this case, the above effect can be more enhanced.

In another preferable embodiment of the invention, the tire is used in a wheel producing a traction force as a main stress and the central main portion of the sub-groove is inclined from the surface side of the block toward the groove bottom in the direction of the traction force. That is, the central main portion of the sub-groove formed on the diagonal at a center of the block is inclined in the direction of the traction force.

This embodiment is restricted to be used in a driving wheel of the vehicle. Although the block portion near to the sub-groove is fallen down toward the sub-groove by the traction force in the conventional tire, according to the invention the rigidity of such a block portion is enhanced by above construction of the sub-groove to suppress the falling-down of the block in the circumferential direction of the tread portion. As a result, a corner part of the block retaining by the falling-down through the traction force without contacting with the ground is more uniformly worn together with the block portion, whereby the irregular wear can be more suppressed.

In another preferable embodiment of the invention, the tire is used in a wheel producing a braking force as a main stress and the central main portion of the sub-groove is inclined from the surface side of the block toward the groove bottom in the direction of the braking force. That is, the central main portion of the sub-groove formed on the diagonal at a center of the block is inclined in the direction of the braking force.

This embodiment is restricted to be used in a non-driving wheel or an idle wheel of the vehicle. Even in this case, the effect of suppressing the irregular wear is obtained likewise the above case.

Moreover, when the aforementioned pneumatic tires are mounted on front and rear wheels of a vehicle in accordance with the use purpose of the tire, the above effects are more surely developed.

In a further preferable embodiment of the invention, the block is shaped into substantially a rhombic form and the central main portion of the sub-groove is arranged so as to extend along a short diagonal of the block. That is, even when the block is shaped in a rhombic form having four equal sides the same results as mentioned above are obtained.

In a still further preferable embodiment of the invention, the central main portion of the sub-groove has an inclination angle of 5-45° with respect to a vertical line drawn to the surface of the block. When the inclination angle is less than 5°, the rigidity of the block in the vicinity of the sub-groove is not sufficiently increased and hence the irregular wear may not be suppressed, while when the inclination angle exceeds 45°, the life of the mold for the vulcanization of the tire becomes short and it is difficult to manufacture the pneumatic tire.

According to a preferred aspect of the invention, a pneumatic tire comprises a plurality of block rows each containing a plurality of blocks and being used for a steering wheel, wherein a central main portion of a sub-groove formed in each block of an outer block row when being mounted onto a vehicle is formed so as to incline in a direction of a side force and a central main portion of a sub-groove formed in each block of an inner block row when being mounted onto the vehicle is formed so as to incline in a direction of a braking force.

In the tire of the preferred aspect, the side force and the braking force are main stresses applied to the blocks from the road surface. Therefore, even when such a tire is used for a steering wheel, the wear resistance is improved in correspondence to the difference between the input directions of external forces at a state of maintaining dry gripping and wet gripping properties equal to those of the conventional tire and hence the long tread life of the tire can be attained.

The invention will be further described with reference to the accompanying drawings, wherein:
FIG. 1 is a diagrammatically developed view of a tread in a front tire of an embodiment according to the invention;
FIG. 2 is a diagrammatically section view taken along a line II-II of FIG. 1;
FIG. 3 is a diagrammatically section view taken along a line III-III of FIG. 1;
FIG. 4 is a diagrammatically section view taken along a line IV-IV of FIG. 1;
FIG. 5 is a diagrammatically developed view of a tread in a rear tire of another embodiment according to the invention;
FIG. 6 is a diagrammatically section view taken along a line VI-VI of FIG. 5;
FIG. 7 is a diagrammatically section view taken along a line VII-VII of FIG. 5;
FIG. 8 is a schematic view illustrating a wearing quantity of a block in a conventional tire;
FIG. 9 is a schematic view illustrating a wearing quantity of a block in a tire according to the invention;
FIG. 10A is a schematically plan view of a conventional block; and
FIG. 10B is a schematically plan view of another conventional block;

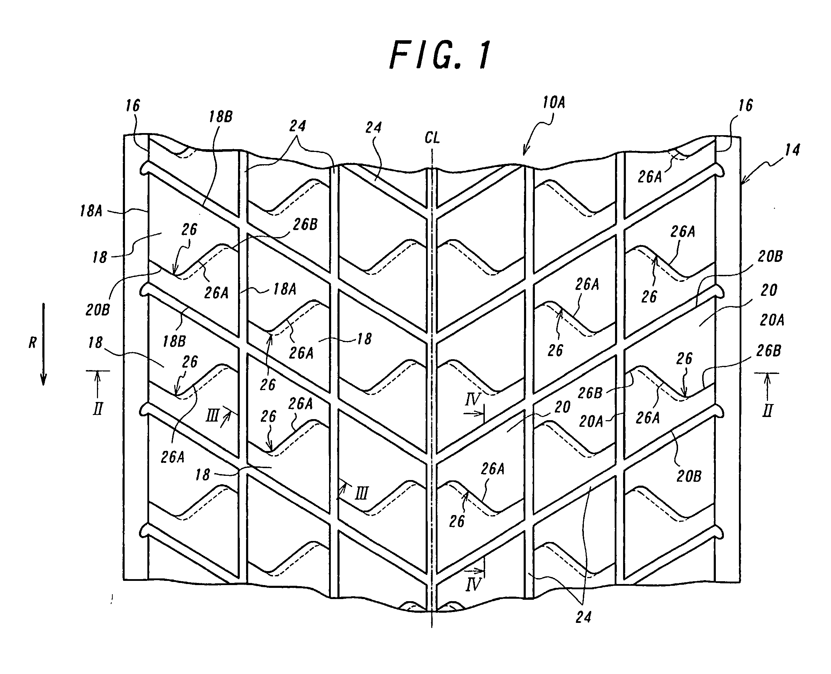

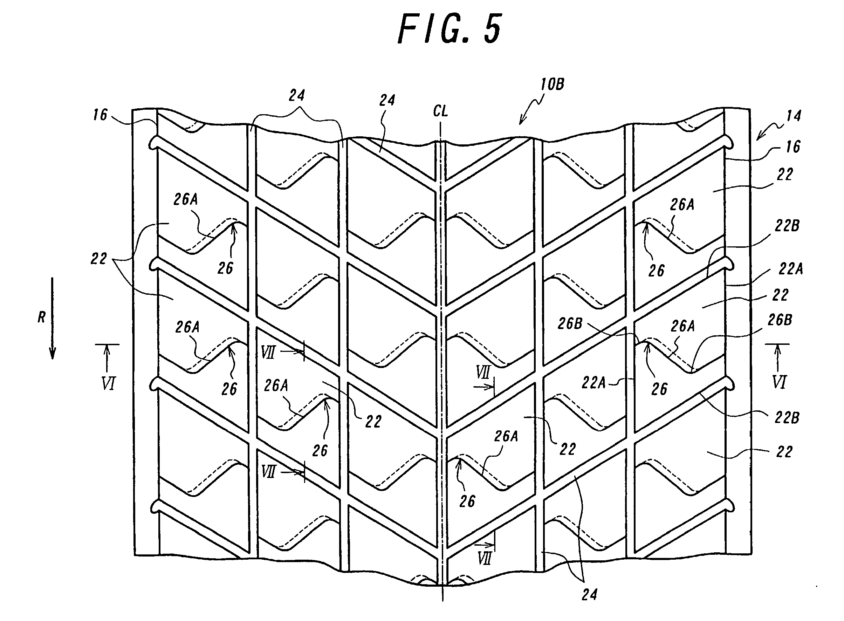

In FIGS. 1 and 5 are shown typical tread patterns of pneumatic tires 10A and 10B as an embodiment of the invention, respectively.

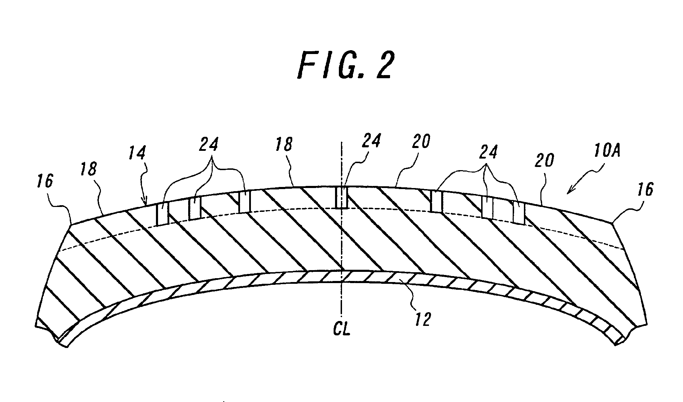

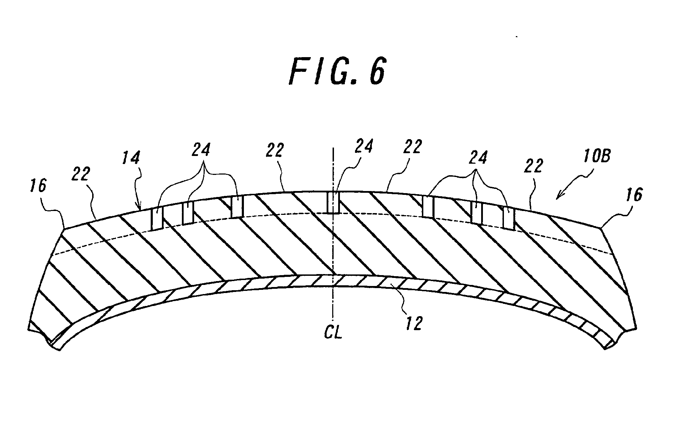

As shown in FIGS. 2 and 6, the internal constructions of the pneumatic tires 10A, 10B are the same as in this type of the conventional pneumatic tire combining a radial carcass 12, a high-rigidity belt (not shown) arranged so as to cover a crown portion of the carcass 12, and a tread 14 arranged on an outer peripheral surface of the belt and made of a tread rubber. Moreover, the description of such a construction will be omitted in embodiments as mentioned later.

Moreover, as shown in FIGS. 1, 2, 5 and 6, the outer skin of the pneumatic tire 10A, 10B contacting with the ground is constituted with the tread 14 shaped into an arc form or a crown form. On both end portions of the tread 14 are formed shoulder portions 16, respectively.

Among these figures, FIG. 1 shows a pneumatic front tire 10A located at a steering wheel side of a vehicle.

As shown in FIG. 1, when the tire 10A is mounted onto a vehicle, it has an outer tread pattern arranged at a left side of a center line CL being an equatorial plane of the tread 14 and an inner tread pattern arranged at a right side of the center line CL.

In the outer tread pattern of the tire 10A are arranged many outer blocks 18 each defined in a parallelogram form by a pair of widthwise sides 18A each extending in a circumferential direction of the tread and a pair of slant sides 18B each being inclined with respect to a forward rotating direction R of the tire and extending from the shoulder portion 16 toward the center line CL and from a left upward side to a right downward side in FIG. 1. In the illustrated embodiment, these outer blocks 18 are arranged at equal intervals over the circumference of the tread 14 and three block rows each containing the outer blocks 18 are formed side by side in the widthwise direction of the tire.

In the inner tread pattern of the tire 10A are arranged many inner blocks 20 each defined in a parallelogram form by a pair of widthwise sides 20A each extending in a circumferential direction of the tread and a pair of slant sides 20B each being inclined with respect to the forward rotating direction R of the tire and extending from the shoulder portion 16 toward the center line CL and from a right upward side to a left downward side in FIG. 1. In the illustrated embodiment, these inner blocks 20 are arranged at equal intervals over the circumference of the tread 14 and three block rows each containing the inner blocks 20 are formed side by side in the widthwise direction of the tire.

Also, main grooves 24 are formed between the outer blocks 18, between the inner blocks 20, and between the outer block 18 and the inner block 20, respectively. Therefore, the tread pattern of the front tire 10A has a construction combining the outer blocks 18 with the inner blocks 20. Moreover, each of the outer block 18 and the inner block 20 is provided with a sub-groove 26 such as a sipe, fine groove or the like. A central main portion 26A of the sub-groove 26 arranged in each of the outer block 18 and the inner block 20 is formed so as to extend along a diagonal of the block 18, 20 and incline with respect to the equatorial plane CL.

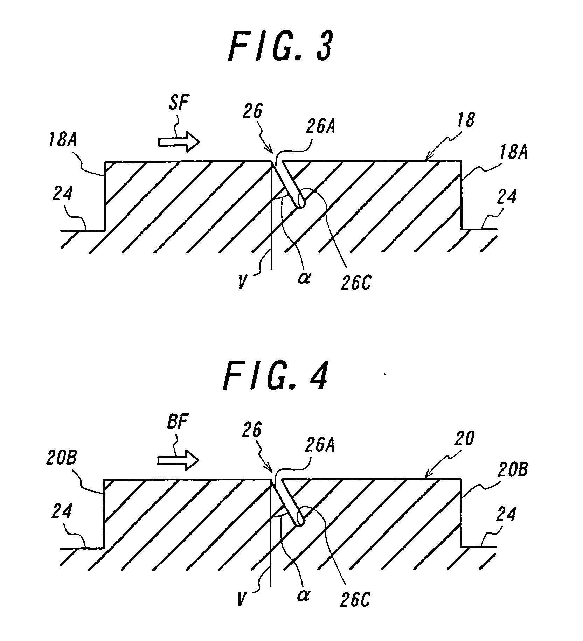

In the outer block 18 shown in FIG. 3, the central main portion 26A of the sub-groove 26 is arranged such that a groove bottom 26C of the sub-groove 26 is inclined inward from an outer surface of the block in a widthwise direction of the tire and toward a direction of side force SF as a main stress applied from a road surface to the outer block 18.

On the other hand, in the inner block 20 shown in FIG. 4, the central main portion 26A of the sub-groove 26 is arranged such that a groove bottom 26C of the sub-groove 26 is inclined from the outer surface of the block toward a direction of braking force BF as a main stress applied from the road surface to the inner block 20 and along a forward rotating direction R of the tire.

Moreover, an inclination angle α of the central main portion 26A of the sub-groove 26 as shown in FIGS. 3 and 4 with respect to a vertical line V drawn from the outer surface of the block is preferably within a range of 5-45°, more preferably 15-25°.

In FIG. 5 is shown a pneumatic rear tire 10B mounted onto a driving wheel side of a vehicle.

As shown in FIG. 5, the tire 10B has a symmetrical tread pattern with respect to the center line CL of the tread 14.

That is, in both side regions of the tire 10B with respect to the center line CL are arranged many blocks 22 each defined in a parallelogram form by a pair of widthwise sides 22A each extending in a circumferential direction of the tread and a pair of slant sides 22B each being inclined with respect to the forward rotating direction R of the tire and extending from the shoulder portion 16 toward the center line CL. In the illustrated embodiment, these blocks 22 are arranged at equal intervals over the circumference of the tread 14 and three block rows each containing the blocks 22 are formed side by side in the widthwise direction of the tire at both sides with respect to the center line CL.

Also, main grooves 24 are formed between the blocks 22. The tread pattern of the tire 10B in the illustrated embodiment has a construction combining the blocks 22.

Moreover, each of the blocks 22 is provided with a sub-groove 26 such as a sipe, a fine groove or the like. A central main portion 26A of the sub-groove 26 arranged in the block 22 is formed so as to extend along a diagonal of the block 22 and incline with respect to the equatorial plane CL.

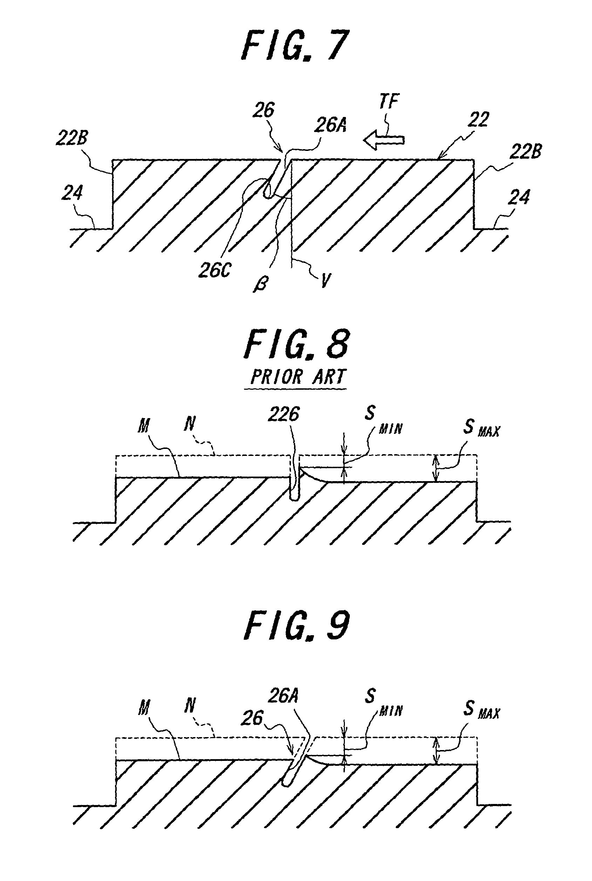

In the block 22 shown in FIG. 7, the central main portion 26A of the sub-groove 26 is arranged such that a groove bottom 26C of the sub-groove 26 is inclined from the outer surface of the block toward a direction of traction force TF as a main stress applied from the road surface to the block 22. Also, an inclination angle β of the central main portion 26A of the sub-groove 26 as shown in FIG. 7 with respect to a vertical line V drawn from the outer surface of the block is preferably within a range of 5-45°, more preferably 15-25°.

Moreover, as shown in FIGS. 1 and 5, both end portions 26B of the sub-groove 26 formed in each of the blocks 18, 20, 22 of the pneumatic tires 10A, 10B extend in parallel to the slant sides 18B, 20B, 22B of the block and reach to the widthwise side 18A, 20A, 22A of the block.

The action of the pneumatic tire 10A, 10B according to the invention will be explained below.

Each of the tires 10A, 10B has a block type tread pattern in which the blocks 18, 20, 22 each having substantially a quadrilateral form are arranged in the tread 14 and provided with one sub-groove 26 slantly formed with respect to the equatorial plane therein.

The central main portion 26A of the sub-groove 26 is formed so as to extend along the diagonal of each block 18, 20, 22 and so as to incline the groove bottom 26C in the central main portion of the sub-groove from the outer surface of the block 18, 20, 22 in a direction of main stress applied to the block 18, 20, 22.

For example, in the outer block 18 of the front tire 10A, the central main portion 26A of the sub-groove 26 is slantly arranged toward the direction of the side force SF shown in FIG. 3 as a main stress, while in the inner block 20 of the front tire 10A, the central main portion 26A of the sub-groove 26 is slantly arranged toward the direction of the braking force BF shown in FIG. 4 as a main stress. In the rear tire 10B, the central main portion 26A of the sub-groove 26 is slantly arranged toward the direction of the traction force TF shown in FIG. 7 as a main stress.

In a super-high performance passenger car making no tire rotation, there is a tendency that irregular wear is created by growing wear in only a specific direction decided for each tire mounting position. However, when the above tires 10A, 10B are applied to the above passenger car, the irregular wear is suppressed by changing the rigidity of the block 18, 20, 22 in the vicinity of the sub-groove 26 because the central main portion 26A of the sub-groove 26 is formed so as to extend along the diagonal of the block 18, 20, 22 having substantially a quadrilateral form and also the central main portion 26A of the sub-groove 26 is slantly arranged toward the groove bottom 26C in the direction of the main stress applied from the road surface to the block.

That is, since the irregular wear is considered to result from the falling-down of the block in the vicinity of the sub-groove, when the central main portion of the sub-groove is inclined in the direction of the main stress applied from the road surface to the block, the rigidity of a portion of the block in the vicinity of the sub-groove that falls down toward the sub-groove by the external force is increased, and hence the falling-down of the block is suppressed and it is possible to suppress the occurrence of the irregular wear.

In the tires 10A, 10b according to the invention, the arranging position and groove volume of the sub-groove 26 are the same as those of the conventional tire, so that the wear resistance is enhanced in correspondence to the difference of the input direction between the external forces generated by the difference of the tire mounting positions at a state of maintaining the dry gripping and wet gripping properties equal to those of the conventional tire and hence a long tread life of the tire can be attained.

Moreover, the inclination angle α, β of the central main portion 26A of the sub-groove 26 in these tires is preferably set to a range of 5-45°. When the inclination angle α, β is less than 5°, the rigidity of the block in the vicinity of the sub-groove is not sufficiently enhanced and the irregular wear may not be suppressed, while when it exceeds 45°, the life of the mold for the vulcanization of the tire is shortened and it is difficult to manufacture the pneumatic tire.

When the rear tire 10B is mounted onto a driving wheel of a vehicle applied with the traction force TF as a main stress, the central main portion 26A of the sub-groove 26 arranged at a center of the block along the diagonal thereof is arranged so as to incline the side of the groove bottom 26C from the outer surface of the block 22 in the direction of the traction force TF, so that the rigidity of the block 22, which has fallen down toward the sub-groove 26 by the traction force TF in the conventional tire, is increased to suppress the falling-down of the block in the circumferential direction of the tread 14. As a result, the corner part of the block 22 in the vicinity of the sub-groove retaining without contacting with the ground and without wearing due to the falling down through the traction force TF is uniformly worn together with the surroundings thereof, whereby the irregular wear can be more suppressed.

Also, when the front tire 10A is mounted onto a steering wheel of a vehicle, the central main portion 26A of the sub-groove 26 arranged on each of the outer blocks 18 in the outer block row is inclined in the direction of the side force SF, while the central main portion 26A of the sub-groove 26 arranged on each of the inner blocks 20 in the inner block row is inclined in the direction of the braking force BF, and also the central main portion 26A of the sub-groove 26 arranged at a center of the block 18, 20 along the diagonal thereof is formed so as to incline the groove bottom 26C of the sub-groove 26 from the outer surface of the block in the directions of the side force SF and the braking force BF, whereby the effect suppressing the irregular wear is obtained.

In the above embodiments, the block is a parallelogram. Moreover, the block may be shaped into a rhombic form in which lengths of four sides are equal to each other wherein the central main portion of the sub-groove may be arranged so as to extend along the short diagonal of the block. That is, even when the block is shaped into substantially the rhombic form, the wear resistance can be enhanced in correspondence to the difference of the input directions of the external forces generated by the difference of the tire mounting position to attain a long tread life of the tire likewise the above embodiments.

Moreover, although there is formed one sub-groove in every block in the above embodiments, two or more sub-grooves may be formed in each block.

The following examples are given in illustration of the invention and are not intended as limitations thereof.

There are provided an example tire as shown in FIGS. 5 and 6 and a conventional tire having the same structure as in the example tire except that a sub-groove is extended vertically from an outer surface of a block. These tires have a tire size of 225/45R17. Each of these tires is inflated under an internal pressure of 220 kPa and mounted onto a driving wheel of a domestic high-performance passenger car and actually run over a distance of 20000 km. The results after such a running test will be explained below.

In the conventional tire, as shown in FIG. 8, a sub-groove 226 is formed in a block 22 so as to extend a groove bottom thereof substantially vertically from the outer surface of the block. In the example tire, as shown in FIG. 9, a central main portion 26A of a sub-groove 26 is formed in the block 22 so as to incline a groove bottom thereof from the outer surface of the block in a direction of main stress.

In the blocks divided by the sub-grooves 226, 26 as shown in FIGS. 8 and 9, a block shape in a new tire state N is shown by dotted lines and a block shape in a used tire state M after the running test is shown by a solid line. Therefore, an irregularly worn quantity S is defined by a difference between a worn quantity S_{MAX} in a position indicating a largest wearing and a worn quantity S_{MIN} in a position indicating a smallest wearing (a remaining portion facing the sub-groove without wearing by the falling-down of the block). That is, the irregularly worn quantity S is calculated by an equation of S = S_{MAX} - S_{MIN}.

As a result of the above running test, the irregularly worn quantity S of the conventional tire is 0.7 mm and the irregularly worn quantity S of the example tire is 0.5 mm. When the irregularly worn quantity S is represented by an index on the basis that the conventional tire is 100, the index value of the example tire is 71, from which it is clear that the tread life of the example tire is improved as compared with that in the conventional tire.

As mentioned above, the pneumatic tire according to the invention having the above construction has an excellent effect that the wear resistance can be improved in correspondence to the difference of the input directions of the external forces generated by the difference of the tire mounting position.

## Claims

1. A pneumatic tire comprising a tread portion (14) having a plurality of blocks (18,20;22), each of which blocks having at least one sub-groove (26) including a central main portion (26A) and end portions (26B) connecting the central main portion to a circumferential groove, **characterised in that** the central main portion (26A) is inclined with respect to an equatorial plane (CL) of the tire in a direction opposite to a direction of inclination of each of the end portions (26B), and **in that** the central main portion (26A) of the sub-groove is formed so that a groove bottom (26C) is inclined from a groove opening at an outer surface side of the block in a direction of a main stress applied from a road surface to the block and the end portions (26B) of the sub-groove are formed so that the groove bottom extends substantially vertically to the outer surface of the block.

2. A pneumatic tire as claimed in claim 1, **characterized in that** the block is shaped in substantially a quadrilateral form and the central main portion (26A) of the sub-groove is extended along a short diagonal of the block.

3. A pneumatic tire as claimed in claim 1 or 2, **characterized in that** the central main portion (26A) of the sub-groove is inclined from the groove opening on the surface side of the block toward the groove bottom (26C) in a direction extending towards an equatorial plane (CL) of the tire.

4. A pneumatic tire as claimed in claim 1 or 2, **characterized in that** the central main portion (26A) of the sub-groove is inclined from the groove opening on the surface side of the block toward the groove bottom (26C) in a direction extending away from an equatorial plane (CL) of the tire.

5. A pneumatic tire as claimed in any of claims 1 to 4, **characterized in that** the block is shaped into substantially a rhombic form and the central main portion (26A) of the sub-groove is arranged so as to extend along a short diagonal of the block.

6. A pneumatic tire as claimed in any of claims 1 to 5, **characterized in that** the central main portion (26A) of the sub-groove has an inclination angle of 5-45° with respect to a vertical line (V) drawn to the surface of the block.

7. A pneumatic tire as claimed in any of claims 1 to 6, **characterized in that** the tire is used in a wheel producing a traction force (TF) as a main stress and the central main portion (26A) of the sub-groove is inclined from the surface side of the block toward the groove bottom (26C) in the direction of the traction force.

8. A pneumatic tire as claimed in any of claims 1 to 6, **characterized in that** the tire is used in a wheel producing a braking force (BF) as a main stress and the central main portion (26A) of the sub-groove is inclined from the surface side of the block toward the groove bottom (26C) in the direction of the braking force.

9. A pneumatic tire as claimed in any of claims 1 to 6, **characterized by** comprising a plurality of block rows each containing a plurality of blocks and being used for a steering wheel, wherein a central main portion (26A) of a sub-groove formed in each block of an outer block row when being mounted onto a vehicle is formed so as to incline a direction of a side force (SF) and a central main portion (26A) of a sub-groove formed in each block of an inner block row when being mounted onto the vehicle is formed so as to incline in a direction of a braking force (BF).

10. A vehicle wherein a pneumatic tire as claimed in claim 7 is mounted as a rear tire, and a pneumatic tire as claimed in claim 8 is mounted as a front tire.

## Patentansprüche

1. Luftreifen, der einen Laufflächenabschnitt (14) mit einer Mehrzahl von Blöcken (18, 20; 22) umfasst, wobei jeder dieser Blöcke wenigstens eine Unterrille (26) mit einem mittleren Hauptabschnitt (26A) und Endabschnitten (26B) aufweist, die den mittleren Hauptabschnitt mit einer Umfangsrille verbinden, **dadurch gekennzeichnet, dass** der mittlere Hauptabschnitt (26A) in Bezug auf eine Äquatorialebene (CL) des Reifens in einer Richtung geneigt ist, die einer Neigungsrichtung jedes der Endabschnitte (26B) entgegengesetzt ist, und **dadurch**, dass der mittlere Hauptabschnitt (26A) der Unterrille so gebildet ist, dass ein Rillenboden (26C) von einer an einer äußeren Oberflächenseite des Blocks öffnenden Rille in einer Richtung einer Hauptbeanspruchung geneigt ist, die von einer Straßenoberfläche auf den Block aufgebracht wird, und die Endabschnitte (26B) der Unterrille so gebildet sind, dass sich der Rillenboden im Wesentlichen vertikal zur Außenfläche des Blocks erstreckt.

2. Luftreifen nach Anspruch 1, **dadurch gekennzeichnet, dass** der Block im Wesentlichen in viereckiger Form gestaltet ist und der mittlere Hauptabschnitt (26A) der Unterrille sich über eine kurze Diagonale des Blocks erstreckt wird.

3. Luftreifen nach Anspruch 1 oder 2, **dadurch gekennzeichnet, dass** der mittlere Hauptabschnitt (26A) der Unterrille von der auf der Oberflächenseite des Blocks öffnenden Rille zum Rillenboden (26C) hin in einer Richtung geneigt ist, die sich zu einer Äquatorialebene (CL) des Reifens hin erstreckt.

4. Luftreifen nach Anspruch 1 oder 2, **dadurch gekennzeichnet, dass** der mittlere Hauptabschnitt (26A) der Unterrille von der auf der Oberflächenseite des Blocks öffnenden Rille zum Rillenboden (26C) hin in einer Richtung geneigt ist, die sich von einer Äquatorialebene (CL) des Reifens weg erstreckt.

5. Luftreifen nach einem beliebigen der Ansprüche 1 bis 4, **dadurch gekennzeichnet, dass** der Block im Wesentlichen in rhombischer Form gestaltet und der mittlere Hauptabschnitt (26A) der Unterrille so angeordnet ist, dass er sich über eine kurze Diagonale des Blocks erstreckt.

6. Luftreifen nach einem beliebigen der Ansprüche 1 bis 5, **dadurch gekennzeichnet, dass** der mittlere Hauptabschnitt (26A) der Unterrille einen Neigungswinkel von 5-45° in Bezug auf eine vertikale Linie (V) hat, die zur Oberfläche des Blocks gezogen wird.

7. Luftreifen nach einem beliebigen der Ansprüche 1 bis 6, **dadurch gekennzeichnet, dass** der Reifen in einem Rad eingesetzt wird, das eine Zugkraft (TF) als eine Hauptbeanspruchung erzeugt, und der mittlere Hauptabschnitt (26A) der Unterrille von der Oberflächenseite des Blocks zum Rillenboden (26C) hin in der Richtung der Zugkraft geneigt ist.

8. Luftreifen nach einem beliebigen der Ansprüche 1 bis 6, **dadurch gekennzeichnet, dass** der Reifen in einem Rad eingesetzt wird, das eine Bremskraft (BF) als Hauptbeanspruchung erzeugt, und der mittlere Hauptabschnitt (26A) der Unterrille von der Oberflächenseite des Blocks zum Rillenboden (26C) hin in der Richtung der Bremskraft geneigt ist.

9. Luftreifen nach einem beliebigen der Ansprüche 1 bis 6, **dadurch gekennzeichnet, dass** er eine Mehrzahl von Blockreihen umfasst, die jeweils eine Mehrzahl von Blöcken enthalten und für ein Lenkrad benutzt werden, wobei ein mittlerer Hauptabschnitt (26A) einer Unterrille, die bei Montage an einem Fahrzeug in jedem Block einer äußeren Blockreihe ausgebildet ist, so gebildet ist, dass er in einer Richtung einer Seitenkraft (SF) geneigt ist, und ein mittlerer Hauptabschnitt (26A) einer Unterrille, die bei Montage an einem Fahrzeug in jedem Block einer inneren Blockreihe ausgebildet ist, so gebildet ist, dass er in einer Richtung einer Bremskraft (BF) geneigt ist.

10. Fahrzeug, bei dem ein Luftreifen nach Anspruch 7 als Hinterreifen und ein Luftreifen nach Anspruch 8 als Vorderreifen montiert sind.

## Revendications

1. Bandage pneumatique comprenant une partie de bande de roulement (14) possédant une pluralité de blocs (18; 20; 22), chacun desdits blocs possédant au moins une rainure secondaire (26) comprenant une partie centrale principale (26A) et des parties d'extrémité (26B) reliant la partie principale centrale à une rainure circonférentielle, **caractérisé en ce que** la partie principale centrale (26A) est inclinée par rapport au plan équatorial (CL) du pneumatique dans une direction opposée à une direction d'inclinaison de chacune des parties d'extrémité (26B), et **en ce que** la partie principale centrale (26A) de la rainure secondaire est formée de sorte que le fond de rainure (26C) est incliné à partir d'une rainure ouvrant du côté de la surface extérieure du bloc dans une direction de la contrainte principale appliquée à partir de la surface routière sur le bloc et les parties d'extrémité (26B) de la rainure secondaire sont formées de sorte que le fond de rainure s'étende pratiquement verticalement vers la surface extérieure du bloc.

2. Bandage pneumatique comme revendiqué dans la revendication 1, **caractérisé en ce que** le bloc est de forme essentiellement quadrilatérale et la partie centrale principale (26A) de la rainure secondaire s'étend le long d'une diagonale courte du bloc.

3. Bandage pneumatique comme revendiqué dans la revendication 1 ou 2, **caractérisé en ce que** la partie centrale principale (26A) de la rainure secondaire est inclinée à partir de la rainure ouvrant du côté de la surface du bloc vers le fond de rainure (26C) dans une direction s'étendant vers le plan équatorial (CL) du pneumatique.

4. Bandage pneumatique comme revendiqué dans la revendication 1 ou 2, **caractérisé en ce que** la partie principale centrale (26A) de la rainure secondaire est inclinée à partir de l'ouverture de rainure sur le côté de surface du bloc vers le fond de rainure (26C) dans une direction s'éloignant du plan équatorial (CL) du pneumatique.

5. Bandage pneumatique comme revendiqué dans une quelconque des revendications 1 à 4, **caractérisé en ce que** le bloc est de forme essentiellement rhombique et la partie centrale principale (26A) de la sous-rainure est agencée de manière à s'étendre le long de la diagonale courte du bloc.

6. Bandage pneumatique comme revendiqué dans une quelconque des revendications 1 à 5, **caractérisé en ce que** la partie centrale principale (26A) de la sous-rainure présente un angle d'inclinaison de 5°-45° par rapport à une ligne verticale (V) tirée vers la surface du bloc.

7. Bandage pneumatique comme revendiqué dans une quelconque des revendications 1 à 6, **caractérisé en ce que** le pneumatique est utilisé dans une roue produisant une force de traction (TF) formant la contrainte principale et la partie centrale principale (26A) de la sous-rainure est inclinée à partir du côté de la surface du bloc vers le fond de rainure (26C) dans la direction de la force de traction.

8. Bandage pneumatique comme revendiqué dans une quelconque des revendications 1 à 6, **caractérisé en ce que** le pneumatique est utilisé dans une roue produisant une force de freinage (BF) formant la contrainte principale et la partie centrale principale (26A) de la sous-rainure est inclinée à partir du côté de la surface du bloc vers le fond de rainure (26C) dans la direction de la force de freinage.

9. Bandage pneumatique comme revendiqué dans une quelconque des revendications 1 à 6, **caractérisé par le fait qu'**il comprend une pluralité de rangées de blocs contenant chacune une pluralité de blocs et qu'il est utilisé pour une roue directrice, dans lequel une partie centrale principale (26A) de la rainure secondaire formée dans chaque bloc d'une rangée de blocs extérieurs lorsqu'il est monté sur un véhicule est formée de manière à s'incliner dans la direction de la force latérale (SF) et une partie centrale principale (26A) de la rainure secondaire formée dans chaque bloc d'une rangée de blocs intérieurs lorsqu'il est monté sur le véhicule est formée de manière à s'incliner dans la direction de la force de freinage (BF).

10. Véhicule dans lequel un bandage pneumatique comme revendiqué dans la revendication 7 est monté comme pneumatique arrière, et le bandage pneumatique comme revendiqué dans la revendication 8 est monté comme pneumatique avant.
